(19) Europäisches Patentamt
European Patent Office
Office européen des brevets

(11) **EP 2 649 978 B1**

(12) **EUROPEAN PATENT SPECIFICATION**

(45) Date of publication and mention
of the grant of the patent:
**27.05.2015 Bulletin 2015/22**

(51) Int Cl.:
***A61H 33/06*** (2006.01)   ***G05D 23/22*** (2006.01)
***H05B 1/02*** (2006.01)

(21) Application number: **13161885.2**

(22) Date of filing: **29.03.2013**

(54) **Method for detecting the opening of an access door to a climate-controlled room and corresponding detecting device**

Verfahren zur Erkennung der Öffnung einer Zugangstür zu einem klimageregelten Raum sowie entsprechende Erkennungsvorrichtung

Procédé pour détecter l'ouverture d'une porte d'accès à une chambre climatisée et dispositif de détection correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 IT BO20120172**

(43) Date of publication of application:
**16.10.2013 Bulletin 2013/42**

(73) Proprietor: **MAC S.r.l.**
**62019 Recanati (IT)**

(72) Inventor: **Mandolini, Luigi**
**62019 Recanati (IT)**

(74) Representative: **Boggio, Luigi et al**
**Studio Torta S.p.A.**
**Via Viotti, 9**
**10121 Torino (IT)**

(56) References cited:
**EP-A1- 1 482 264      DE-U1- 20 315 907**
**JP-A- 2006 275 393    JP-A- 2009 085 531**
**JP-A- 2010 043 750    KR-A- 20040 063 465**
**KR-A- 20090 062 228**

**Description**

The present invention relates to a method and a corresponding device for detecting the opening of an access door to a climate-controlled room.

In particular, the present invention finds advantageous, but not exclusive, application in rooms used for Turkish baths, to which the following description will make explicit reference, without any loss of generality.

As is known, rooms used for Turkish baths must be kept at a sufficiently high temperature and humidity. The temperature and humidity are maintained at the desired values by controlling the switching on and off of a steam generator communicating with the rooms. The steam generator is operated on the basis of the temperature detected by temperature sensors arranged inside the rooms. Nevertheless, each opening of the access doors to the rooms causes a sudden drop in the temperature and humidity inside the rooms. To that end, an electromechanical switch is mounted on each access door to detect its opening and immediately start the steam generator.

Operation of the steam generator via electromechanical switches does not allow correct modulation of the amount of steam necessary to regain the desired temperature and humidity values. For example, if the opening of the access door is very brief, it might not actually be necessary to switch on the steam generator. Moreover, if one of the doors is left open, the steam generator risks being permanently on, creating hazardous situations that could cause damage to things or injury to unwary persons.

The utility model DE 20315807 U1 discloses a control circuit for the heating-up phase of a heater for heating a sauna. A door-switch and a control switch are arranged in the region of a door of a room to be heated. A heater control device is enabled when the control switch is operated. If the control switch is not operated within a predetermined time after the door switch closes, and/or if the door switch is opened before a predetermined heating temperature is reached, the heater control device is disabled.

The object of the present invention is to provide a method and a corresponding device for detecting the opening of an access door to a room used as a Turkish bath that are devoid of the above-described drawbacks and, at the same time, are simple and inexpensive to implement.

In accordance with the present invention, a method and a device are provided for detecting the opening of an access door to a climate-controlled room, as defined in the appended claims.

The present invention will now be described with reference to the attached drawings, which illustrate a non-limitative embodiment, where:

- Figure 1 shows the device for detecting the opening of an access door to a climate-controlled room, this device being made according to the principles of the present invention; and
- Figure 2 schematically shows the architecture of software installed in the processing unit of the device in Figure 1 and implementing the method of the present invention.

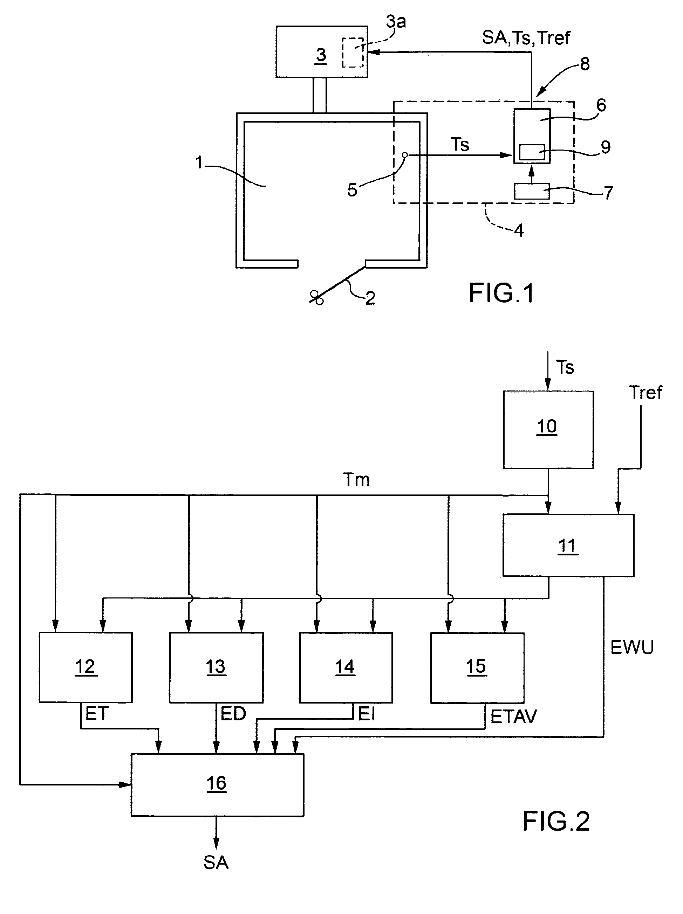

In Figure 1, reference numeral 1 indicates a climate-controlled room, in particular a heated room, fitted with a door 2 for access to the room 1. For example, the room 1 is used as a Turkish bath or as a sauna. The room 1 is heated by a heat generator 3 consisting, for example, of a boiler. Reference numeral 4 indicates a device for detecting the opening of the door 2, this device 4 being made according to the present invention.

The detecting device 4 comprises an ambient temperature sensor 5 arranged inside the room 1 to measure the temperature of the air in the room 1 and a processing unit 6, which is connected to the sensor 5 to receive a signal from the latter that represents the instantaneous ambient temperature of the room 1 and is connectable to an electronic control unit 3a of the heat generator 3 to provide a signal SA indicating the probable opening of the door 2. For simplicity, the instantaneous ambient temperature provided by the sensor 5 will hereinafter be referred to as the measured temperature Ts. The detecting device 4 thus detects the opening of the door 2 in an indirect manner, i.e. based on processing the detected ambient temperature. The detecting device 4 also comprises a selector device 7 consisting, for example, of a keypad and connected to the processing unit 6 to allow an operator to set a reference ambient temperature Tref, which represents the desired temperature inside the room 1. The detecting device 4 has a communication port 8 to communicate the reference ambient temperature Tref and the measured temperature Ts provided by the sensor 5 to the control unit 3a.

The control unit 3a of the heat generator 3 is configured to control the switching on and off of the heat generator 3 as a function of the measured temperature Ts and the signal SA. For example, the control unit is configured to switch off the generator 3 if the signal SA indicates the opening of the door for a time longer than a predetermined timeout of between 5 and 15 minutes. Preferably, this timeout is equal to 10 minutes.

The processing unit 6 is configured to implement the method for detecting the opening of the door of a climate-controlled room of the present invention. In particular, software with an architecture implementing the detection method of the present invention is loaded on the processing unit 6. Furthermore, the processing unit 6 comprises at least one memory 9 for storing the temperature values needed for executing the method. The architecture of the software loaded on the processing unit 6 is shown in Figure 2 and described in greater detail hereinafter.

With reference to Figure 2, the architecture of the software loaded on the processing unit 6 comprises a filter module 10 to filter the measured temperature Ts, which is a temperature that fluctuates strongly over time, for the purpose of providing a filtered temperature Tm having a much less "noisy" time trend, i.e. with much less fluctuation than that of the measured temperature Ts.

An initial calculation process 11 receives the filtered temperature Tm and the reference ambient temperature Tref in input and processes the filtered temperature Tm so as to generate an open door event EWU as soon as the filtered temperature Tm assumes a decreasing trend over time and the filtered temperature Tm is still lower than the reference ambient temperature Tref. The initial process 11 therefore works during an initial transitory or warm-up phase that runs from the moment when the heat generator 3 is switched on to the moment when the filtered temperature Tm reaches the reference ambient temperature Tref. Alternatively, the warm-up phase ends when the initial process 11 determines that the filtered temperature has stabilized around a certain temperature value, which is taken as a normal operating temperature.

As soon as the normal operating temperature of the room 1 is reached, i.e. when the aforementioned warm-up phase has ended, the initial process 11 passes control to four parallel calculation processes 12, 13, 14 and 15, each of which receives the filtered temperature Tm in input and processes it to generate an open door event ET, ED, EI and ETAV when a respective event condition occurs, based on a controlled quantity and a comparison quantity. The controlled quantities and the comparison quantities of all the calculation processes 12-15 are determined as a function of the filtered temperature Tm. In this document, it is understood that parallel calculation processes means calculation processes that simultaneously perform relevant processing to generate, in a manner independent of each other, the associated open door events ET, ED, EI and ETAV.

The open door events EWU, ET, ED, EI and ETAV are collected by a collection module 16, which handles the generation of the signal SA as soon as any of the open door events EW, ET, ED, EI and ETAV is generated.

Process 12 evaluates an event condition based on the filtered temperature Tm and on a comparison temperature value Tc. In other words, process 12 operates on a controlled quantity consisting of the filtered temperature Tm. The comparison temperature value Tc is determined as a function of the minimum values of the filtered temperature Tm that are recorded within a first moving time window $\Delta t12$, i.e. within the last period of time passed equal to time window $\Delta t12$. The minimum values are recorded in the memory 9. In particular, the comparison temperature value Tc is determined as a function of the average value Tmm of the minimum values of the filtered temperature Tm recorded in the time window $\Delta t12$. Advantageously, the comparison temperature value Tc is calculated as the difference between the average value Tmm and a temperature offset Toff.

The event condition of process 12 is satisfied, and therefore triggers the generation of an event ET, when the filtered temperature Tm is lower than the comparison temperature value Tc, i.e. when:

$$Tm < Tmm - Toff.$$

Considering that the reference ambient temperature Tref is selected in a range normally between 40 and 50°C, the temperature offset Toff is comprised between 0.2 and 0.8°C, and is preferably equal to 0.5°C.

Process 13 evaluates one or more event conditions based on the first derivative Dm of the filtered temperature Tm and on respective comparison derivative values. In other words, process 13 operates on a controlled quantity consisting of the first derivative Dm. The comparison derivative value is determined as a function of the minimum values of the first derivative Dm that are recorded within a moving time window $\Delta t13$. The minimum values are recorded in the memory 9 in this case as well. In particular, the comparison derivative values are determined as a function of the average value Dmm of the minimum values recorded for the first derivative Dm.

The minimum values of the derivative are only recorded if they are negative. As the filtered temperature Tm has, under regular conditions, a time trend that comprises rising sections (positive first derivative) alternating with descending sections (negative first derivative), the minimum values of the first derivative Dm, and therefore the average value Dmm, are necessarily negative values.

A first event condition of process 13 has a comparison derivative value Dc1 that is calculated as the difference between the average value Dmm and a derivate offset Doff. This event condition is satisfied, and therefore triggers the generation of an event ED, when the first derivative Dm is lower than the comparison derivative value Dc1, i.e. when:

$$Dm \; < \; Dmm \; - \; Doff.$$

A second event condition of process 13 has the same comparison derivative value Dc1, but is satisfied, and therefore triggers the generation of an event ED, when the first derivative Dm is substantially equal to the comparison derivative value Dc1 for at least a certain period of time Δtoff1. By defining the period of time Δtm as the time interval in which the first derivative Dm remains substantially constant, then the second event condition is satisfied when:

$$Dm \; = \; Dmm \; - \; Doff, \; and \; \Delta tm \; \geq \; \Delta toff1.$$

A third event condition of process 13 has a comparison derivative value Dc2 that is equal to the average value Dmm and is satisfied, and therefore triggers the generation of an event ED, when the first derivative Dm is substantially equal to the comparison derivative value Dc2 for a certain period of time Δtoff2 longer than period of time Δtoff1, i.e. when:

$$Dm \; = \; Dmm, \; and \; \Delta tm \; \geq \; \Delta toff2.$$

The periods of time Δtoff1 and Δtoff2 have respective values comprised between 10 and 60 seconds.

Process 14 evaluates an event condition based on a controlled quantity consisting of the last period of time Im in which the filtered temperature Tm has an increasing trend over time and on a control quantity consisting of a comparison time value Ic. The comparison time value Ic is determined as a function of those periods of time when the filtered temperature Tm has an increasing trend over time, which are recorded within a moving time window Δt14. These periods of time are recorded in the memory 9. In particular, the comparison time value Ic is determined as a function of the average value Imm of the periods of time recorded in which filtered temperature Tm has an increasing trend over time. Advantageously, the comparison time value Ic is calculated as a certain percentage F of the average value Imm. Advantageously, the percentage F is comprised between 40% and 60%, and is preferably equal to 50%.

The event condition of process 14 is satisfied, and therefore triggers the generation of an event EI, when the last period of time Im is shorter than the comparison time value Ic, i.e. when:

$$Im \; < \; F \cdot Imm.$$

Process 15 evaluates an event condition based on the same controlled quantity of process 12, namely the filtered temperature Tm, and on a control quantity consisting of a further comparison temperature value Tc2. The comparison temperature value Tc2 is determined as a function of the filtered temperature values Tm that are recorded within a moving time window Δt15, namely within the last period of time passed equal to time window Δt15. In particular, the comparison temperature value Tc2 is determined as a function of the average value Tmav of the filtered temperature values Tm recorded in the time window Δt15. Advantageously, the comparison temperature value Tc2 is calculated as the difference between the average value Tmav and a temperature offset Toff2.

The event condition of process 15 is satisfied, and therefore triggers the generation of an event ETAV, when the filtered temperature Tm is lower than the comparison temperature value Tc2, i.e. when:

$$Tm \; < \; Tmav \; - \; Toff2.$$

The average value Tmav normally converges to the reference ambient temperature Tref. If the reference ambient temperature Tref is selected in the range comprised between 40 and 50°C, then the temperature offset Toff2 is comprised between 2 and 8°C, and is preferably equal to 5°C.

According to a further embodiment of the present invention, the initial calculation process 11 records the time trend of the filtered temperature Tm for each successful warm-up phase, or rather for each warm-up phase in which no open door event EWU is generated. In this way, a temperature band is obtained that is compared with the filtered temperature Tm during each subsequent warm-up phase. In other words, during at least the first warm-up phase, an open door event EWU is generated as soon as the filtered temperature Tm assumes a decreasing trend over time, while during the subsequent warm-up phases an open door event EWU is also generated when the filtered temperature Tm leaves the recorded temperature band. However, the open door event EWU is only generated if the filtered temperature Tm is still lower than the reference ambient temperature Tref.

It is worth underlining that the above-described method for detecting the opening of a door measures the temperature inside the room by means of a single ambient temperature sensor 5. In other words, the detecting device 4 comprises a single ambient temperature sensor 5.

The main advantage of the above-described method for detecting the opening of a door and the corresponding detecting device 4 is to improve the control of heat energy production following the opening of the door. Another advantage of the invention is to avoid the use of electromechanical switches and to employ elements that might already be present in the rooms in which the device 4 is used, such as the temperature sensor for example. Another advantage, which is substantially aesthetical, follows from this. In fact, an electromechanical switch applied to a door of a Turkish bath, which is substantially composed of a sheet of glass or, in general, to a completely transparent cabin, has an unappealing visual impact, while the temperature sensor can be located far away from the door, in a less visible position.

Furthermore, it is worth noting that the above-described method for detecting the opening of a door and the corresponding detecting device 4 are suitable for detecting the opening of the access door of any climate-controlled room, in particular a room in which the temperature is controlled on the basis of temperature measurements taken by means of a sensor installed in the room. For example, the method and the device 4 of the invention are applicable to other type of heated room, for example a room used for sauna, which is very similar to a room for a Turkish bath, or a fresh-air climate-controlled room.

**Claims**

1. A method for detecting the opening of an access door to a climate-controlled room, the method comprising:

   - measuring the temperature inside the room (1) by means of a single ambient temperature sensor (5);
   the method being **characterized in that** it comprises:
   - processing the measured temperature (Ts) by means of a plurality of parallel processes (12-15), each of which generates, in a manner independent of each other, an open door event (ET, ED, EI, ETAV) upon the occurrence of at least one event condition; and
   - signalling (SA) the opening of the door (2) as soon as any of the parallel processes (12-15) generates an open door event (ET, ED, EI, ETAV).

2. The method according to claim 1, wherein the processing of the measured temperature (Ts) involves filtering said measured temperature (Ts) so as to obtain a filtered temperature (Tm) and processing the filtered temperature (Tm) by means of said parallel processes; said event condition being based on a controlled quantity (Tm, Dm, Im) and on a comparison quantity (Tc, Dc1, Dc2, Tc), both said quantities being determined as a function of the filtered temperature (Tm).

3. The method according to claim 2, wherein said parallel processes (12-15) comprise a first process (12) comprising a first event condition, whose controlled quantity consists of said filtered temperature (Tm).

4. The method according to claim 3, wherein the comparison quantity of said first event condition is a comparison temperature value (Tc) determined as a function of the minimum values of the filtered temperature (Tm), which are recorded within a first moving time window ($\Delta$t12).

5. The method according to claim 3 or 4, wherein said first event condition is fulfilled when the filtered temperature (Tm) is lower than a comparison temperature value (Tc).

6. The method according to any of claims 2 to 5, wherein said parallel processes (12-15) comprise a second process (13) comprising a second event condition, whose controlled quantity consists of the first derivative (Dm) of the filtered temperature (Tm).

7. The method according to claim 6, wherein the comparison quantity of said second event condition is a comparison derivative value (Dc) determined as a function of the minimum values of the first derivative (Dm) of the filtered temperature (Tm), which are recorded within a second moving time window ($\Delta$t13).

8. The method according to claim 7 or 6, wherein said second event condition is fulfilled when the first derivative (Dm) of the filtered temperature (Tm) is lower than a comparison derivative value (Dc).

9. The method according to any of claims 6 to 8, wherein said second process (13) comprises at least one third event condition, which is fulfilled when the first derivative (Dm) of the filtered temperature (Tm) remains substantially equal to a respective comparison derivative value (Dc1, Dc2) for a certain time period ($\Delta$toff1, $\Delta$toff2).

10. The method according to any of claims 2 to 9, wherein said parallel processes (12-15) comprise a third process (14) comprising a fourth event condition, whose controlled quantity consists of the last time period (Im) in which the filtered temperature (Tm) has an increasing trend over time.

11. The method according to claim 10, wherein the comparison quantity of said fourth event condition is a comparison time value (Ic) determined as a function of those time periods in which the filtered temperature (Tm) has an increasing trend over time, which are recorded within a third moving time window ($\Delta$t14).

12. The method according to claim 10 or 11, wherein said fourth event condition is fulfilled when said last time period (Im), in which the filtered temperature (Tm) has an increasing trend over time, is lower than a comparison time value (Ic).

13. The method according to any of claims 2 to 12, wherein said parallel processes (12-15) comprise a fourth process (15) comprising a fifth event condition, whose controlled quantity consists of said filtered temperature (Tm) and whose comparison quantity is a second comparison temperature value (Tc2) determined as a function of an average value (Tmav) of the values of the filtered temperature (Tm), which are recorded within a fourth moving time window ($\Delta$t15).

14. The method according to any of claims 2 to 13, wherein the processing of the measured temperature (Ts) involves processing the filtered temperature (Tm) by means of an initial process (11), which generates an open door event as soon as the filtered temperature (Tm) assumes a decreasing trend over time and the filtered temperature (Tm) is still lower than a reference temperature (Tref); said parallel processes (12-15) processing the filtered temperature (Tm) after the latter has reached said reference temperature (Tref).

15. A device for detecting the opening of an access door to a climate-controlled room, the device comprising a single ambient temperature sensor (5) suitable for being arranged inside the room (1) for measuring the temperature in the room (1); the device being **characterized in that** it comprises processing means (6) configured to implement the method according to any of claims 1 to 14.

**Patentansprüche**

1. Verfahren für ein Erfassen des Öffnens einer Zugangstür zu einem klimagesteuertem Raum, wobei das Verfahren aufweist:

   ein Messen der Temperatur innerhalb des Raums (1) durch einen einzigen Umgebungstemperaturmesswertgeber (5);
   wobei das Verfahren **dadurch gekennzeichnet ist, dass** es aufweist:

   ein Verarbeiten der gemessenen Temperatur (Ts) durch eine Vielzahl paralleller Prozesse (12-15), von denen jeder, in einer voneinander unabhängigen Weise, bei dem Auftreten von mindestens einer Ereignisbedingung, ein Offene-Tür-Ereignis (ET, ED, EI, ETAV) erzeugt; und
   ein Signalisieren (SA) des Öffnens der Tür (2), sobald irgendeiner der parallelen Prozesse (12-15) ein Offene-Tür-Ereignis (ET, ED, EI, ETAV) erzeugt.

2. Verfahren nach Anspruch 1, wobei das Verarbeiten der gemessenen Temperatur (Ts) ein Filtern der gemessenen Temperatur (Ts) beinhaltet, um so eine gefilterte Temperatur (Tm) zu erhalten, und ein Verarbeiten der gefilterten Temperatur (Tm) durch die parallelen Prozesse; wobei die Ereignisbedingung auf einer gesteuerten Größe (Tm, Dm, Im) und einer Vergleichsgröße (Tc, Dc1, Dc2, Tc) basiert, wobei die beiden Größen als eine Funktion der gefilterten Temperatur (Tm) bestimmt werden.

3. Verfahren nach Anspruch 2, wobei die parallelen Prozesse (12-15) einen ersten Prozess (12) aufweisen, der eine erste Ereignisbedingung aufweist, deren gesteuerte Größe aus der gefilterten Temperatur (Tm) besteht.

4. Verfahren nach Anspruch 3, wobei die Vergleichsgröße der ersten Ereignisbedingung ein Vergleichstemperaturwert (Tc) ist, der als eine Funktion der Minimalwerte der gefilterten Temperatur (Tm) bestimmt wird, die innerhalb eines ersten Bewegungszeitfensters (Δt12) aufgezeichnet werden.

5. Verfahren nach Anspruch 3 oder 4, wobei die erste Ereignisbedingung erfüllt ist, wenn die gefilterte Temperatur (Tm) geringer als ein Vergleichstemperaturwert (Tc) ist.

6. Verfahren nach einem der Ansprüche 2 bis 5, wobei die parallelen Prozesse (12-15) einen zweiten Prozess (13) aufweisen, der eine zweite Ereignisbedingung aufweist, deren gesteuerte Größe aus der ersten Ableitung (Dm) der gefilterten Temperatur (Tm) besteht.

7. Verfahren nach Anspruch 6, wobei die Vergleichsgröße der zweiten Ereignisbedingung ein Vergleichsableitungswert (Dc) ist, der als eine Funktion der Minimalwerte der ersten Ableitung (Dm) der gefilterten Temperatur (Tm) bestimmt wird, die innerhalb eines zweiten Bewegungszeitfensters (Δt13) aufgezeichnet werden.

8. Verfahren nach Anspruch 7 oder 6, wobei die zweite Ereignisbedingung erfüllt ist, wenn die erste Ableitung (Dm) der gefilterten Temperatur (Tm) geringer als ein Vergleichsableitungswert (Dc) ist.

9. Verfahren nach einem der Ansprüche 6 bis 8, wobei der zweite Prozess (13) mindestens eine dritte Ereignisbedingung aufweist, die erfüllt ist, wenn die erste Ableitung (Dm) der gefilterten Temperatur (Tm) im Wesentlichen gleich zu einem jeweiligen Vergleichsableitungswert (Dc1, Dc2) für eine bestimmte Zeitdauer (Δtoff1, Δtoff2) bleibt.

10. Verfahren nach einem der Ansprüche 2 bis 9, wobei die parallelen Prozesse (12-15) einen dritten Prozess (14) aufweisen, der eine vierte Ereignisbedingung aufweist, deren gesteuerte Größe aus der letztmaligen Dauer (Im) besteht, in der die gefilterte Temperatur (Tm) eine ansteigende Tendenz über die Zeit hat.

11. Verfahren nach Anspruch 10, wobei die Vergleichsgröße der vierten Ereignisbedingung ein Vergleichszeitwert (Ic) ist, der als eine Funktion dieser Zeitdauern bestimmt wird, in denen die gefilterte Temperatur (Tm) eine ansteigende Tendenz über die Zeit hat, die innerhalb eines dritten Bewegungszeitfensters (Δt14) aufgezeichnet werden.

12. Verfahren nach Anspruch 10 oder 11, wobei die vierte Ereignisbedingung erfüllt ist, wenn die letztmalige Dauer (Im), in der die gefilterte Temperatur (Tm) eine ansteigende Tendenz über die Zeit hat, geringer als ein Vergleichszeitwert (Ic) ist.

13. Verfahren nach einem der Ansprüche 2 bis 12, wobei die parallelen Prozesse (12-15) einen vierten Prozess (15) aufweisen, der eine fünfte Ereignisbedingung aufweist, deren gesteuerte Größe aus der gefilterten Temperatur (Tm) besteht, und deren Vergleichsgröße ein zweiter Vergleichstemperaturwert (Tc2) ist, der als eine Funktion eines Mittelwerts (Tmav) der Werte der gefilterten Temperatur (Tm) bestimmt wird, die innerhalb eines vierten Bewegungszeitfensters (Δt15) aufgezeichnet werden.

14. Verfahren nach einem der Ansprüche 2 bis 13, wobei die Verarbeitung der gemessenen Temperatur (Ts) ein Verarbeiten der gefilterten Temperatur (Tm) durch einen Ausgangsprozess (11) beinhaltet, der ein Offene-Tür-Ereignis erzeugt, sobald die gefilterte Temperatur (Tm) eine abnehmende Tendenz über die Zeit annimmt, und die gefilterte Temperatur (Tm) weiterhin geringer als eine Referenztemperatur (Tref) ist; wobei die parallelen Prozesse (12-15) die gefilterte Temperatur (Tm) verarbeiten, nachdem die letzte diese Referenztemperatur (Tref) erreicht hat.

15. Eine Vorrichtung für ein Erfassen des Öffnens einer Zugangstür zu einem klimagesteuertem Raum, wobei die Vorrichtung einen einzigen Umgebungstemperaturmesswertgeber (5) aufweist, der geeignet ist, innerhalb des Raums (1) für ein Messen der Temperatur in dem Raum (1) angeordnet zu werden; wobei die Vorrichtung **dadurch gekennzeichnet ist, dass** sie Verarbeitungsmittel (6) aufweist, die konfiguriert sind, das Verfahren nach einem der Ansprüche 1 bis 14 zu implementieren.

**Revendications**

1.  Procédé destiné à détecter l'ouverture d'une porte d'accès à une pièce climatisée, le procédé comprenant :

    - un mesurage de la température à l'intérieur de la pièce (1) au moyen d'un unique capteur de température ambiante (5) ;
    - un traitement de la température mesurée (Ts) au moyen d'une pluralité de processus parallèles (12-15), dont chacun génère, d'une manière indépendante les uns des autres, un événement de porte ouverte (ET, ED, EI, ETAV) dès l'occurrence d'au moins une condition d'événement ; et
    - un signalement (SA) de l'ouverture de la porte (2) dès que l'un quelconque des processus parallèles (12-15) génère un événement de porte ouverte (ET, ED, EI, ETAV).

2.  Procédé selon la revendication 1, dans lequel le traitement de la température mesurée (Ts) implique un filtrage de ladite température mesurée (Ts) de sorte à obtenir une température filtrée (Tm) et un traitement de la température filtrée (Tm) au moyen desdits processus parallèles ; ladite condition d'événement étant basée sur une quantité contrôlée (Tm, Dm, Im) et sur une quantité de comparaison (Tc, Dc1, Dc2, Tc), lesdites quantités étant toutes deux déterminées comme une fonction de la température filtrée (Tm).

3.  Procédé selon la revendication 2, dans lequel lesdits processus parallèles (12-15) comprennent un premier processus (12) comprenant une première condition d'événement, dont une quantité contrôlée consiste en ladite température filtrée (Tm).

4.  Procédé selon la revendication 3, dans lequel la quantité de comparaison de ladite première condition d'événement est une valeur de température de comparaison (Tc) déterminée comme une fonction des valeurs minimales de la température filtrée (Tm), qui sont enregistrées dans une première fenêtre de temps de déplacement (Δt12).

5.  Procédé selon la revendication 3 ou 4, dans lequel ladite première condition d'événement est satisfaite lorsque la température filtrée (Tm) est inférieure à une valeur de température de comparaison (Tc).

6.  Procédé selon l'une quelconque des revendications 2 à 5, dans lequel lesdits processus parallèles (12-15) comprennent un deuxième processus (13) comprenant une deuxième condition d'événement, dont une quantité contrôlée consiste en la dérivée première (Dm) de la température filtrée (Tm).

7.  Procédé selon la revendication 6, dans lequel la quantité de comparaison de ladite deuxième condition d'événement est une valeur de dérivée de comparaison (Dc) déterminée comme une fonction des valeurs minimales de la dérivée première (Dm) de la température filtrée (Tm), qui sont enregistrées dans une deuxième fenêtre de temps de déplacement (Δt13).

8.  Procédé selon la revendication 7 ou 6, dans lequel ladite deuxième condition d'événement est satisfaite lorsque la dérivée première (Dm) de la température filtrée (Tm) est inférieure à une valeur de dérivée de comparaison (Dc).

9.  Procédé selon l'une quelconque des revendications 6 à 8, dans lequel ledit deuxième processus (13) comprend au moins une troisième condition d'événement, qui est satisfaite lorsque la dérivée première (Dm) de la température filtrée (Tm) reste sensiblement égale à une valeur de dérivée de comparaison respective (Dc1, Dc2) pendant un certain laps de temps (Δtoff1, Δtoff2).

10. Procédé selon l'une quelconque des revendications 2 à 9, dans lequel lesdits processus parallèles (12-15) comprennent un troisième processus (14) comprenant une quatrième condition d'événement, dont une quantité contrôlée consiste en le dernier laps de temps (Im) dans lequel la température filtrée (Tm) présente une tendance à l'augmentation au fil du temps.

11. Procédé selon la revendication 10, dans lequel la quantité de comparaison de ladite quatrième condition d'événement est une valeur de temps de comparaison (Ic) déterminée comme une fonction de ces laps de temps dans lesquels la température filtrée (Tm) présente une tendance à l'augmentation au fil du temps, qui sont enregistrés dans une troisième fenêtre de temps de déplacement (Δt14).

12. Procédé selon la revendication 10 ou 11, dans lequel ladite quatrième condition d'événement est satisfaite lorsque ledit dernier laps de temps (Im), dans lequel la température filtrée (Tm) présente une tendance à l'augmentation au fil du temps, est inférieur à une valeur de temps de comparaison (Ic).

13. Procédé selon l'une quelconque des revendications 2 à 12, dans lequel lesdits processus parallèles (12-15) comprennent un quatrième processus (15) comprenant une cinquième condition d'événement, dont une quantité contrôlée consiste en ladite température filtrée (Tm) et dont une quantité de comparaison est une deuxième valeur de température de comparaison (Tc2) déterminée comme une fonction d'une valeur moyenne (Tmav) des valeurs de la température filtrée (Tm), qui sont enregistrées dans une quatrième fenêtre de temps de déplacement ($\Delta$t15).

14. Procédé selon l'une quelconque des revendications 2 à 13, dans lequel le traitement de la température mesurée (Ts) implique un traitement de la température filtrée (Tm) au moyen d'un processus initial (11), qui génère un événement de porte ouverte dès que la température filtrée (Tm) adopte une tendance à la diminution au fil du temps et la température filtrée (est) est encore inférieure à une température de référence (Tref) ; lesdits processus parallèles (12-15) traitant la température filtrée (Tm) après que cette dernière a atteint ladite température de référence (Tref).

15. Dispositif destiné à détecter l'ouverture d'une porte d'accès à une pièce climatisée, le dispositif comprenant un unique capteur de température ambiante (5) approprié pour être agencé à l'intérieur de la pièce (1) afin de mesurer la température dans la pièce (1) ; le dispositif étant **caractérisé en ce qu'**il comprend un moyen de traitement (6) configuré pour implémenter le procédé selon l'une quelconque des revendications 1 à 14.

FIG.1

FIG.2

**EP 2 649 978 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 20315807 U1